# FASCICULE DE BREVET EUROPEEN

(11) **EP 2 419 377 B1**
(45) Date de publication et mention de la délivrance du brevet: **27.05.2015**
(21) Numéro de dépôt: 10713179.9
(22) Date de dépôt: 02.04.2010
(51) Int. Cl.: C01B 25/32, C01B 25/37, C01F 17/00, H01J 9/52, C09K 11/01, C09K 11/77

(54) **PROCEDE DE RECUPERATION DES TERRES RARES A PARTIR D'UN MELANGE SOLIDE CONTENANT UN HALOPHOSPHATE ET UN COMPOSE D'UNE OU PLUSIEURS TERRES RARES**
VERFAHREN ZUR RÜCKGEWINNUNG VON SELTENERDELEMENTEN AUS EINER FESTEN MISCHUNG, DIE EIN HALOGENPHOSPHAT UND EINE VERBINDUNG EINES ODER MEHRERER SELTENERDELEMENTE ENTHÄLT
METHOD FOR RECOVERING RARE EARTH ELEMENTS FROM A SOLID MIXTURE CONTAINING A HALOPHOSPHATE AND A COMPOUND OF ONE OR MORE RARE EARTH ELEMENTS

(30) Priorité: 14.04.2009 FR 0901807
(43) Date de publication de la demande: 22.02.2012
(73) Titulaire: Rhodia Opérations, 93306 Aubervilliers (FR)
(72) Inventeur: BRACONNIER, Jean-Jacques, F-17230 Andilly (FR); ROLLAT, Alain, F-75018 Paris (FR)
(74) Mandataire: Senninger, Thierry
(86) Numéro de dépôt international: PCT/EP2010/054460
(87) Numéro de publication internationale: WO 2010/118967

(56) Documents cités:
- EP-A- 0 157 249
- WO-A-2007/141177
- DD-A1- 246 551
- DE-A1- 19 918 793
- FR-A- 2 864 861
- US-A- 5 160 663

## Description

L'invention concerne un procédé de récupération des terres rares à partir d'un mélange solide contenant un halophosphate et un composé d'une ou plusieurs terres rares.

Le marché des lampes à économie d'énergie est aujourd'hui en pleine expansion. On sait que le domaine de l'éclairage est en effet un poste majeur dans la facture énergétique des pays industrialisés et que l'utilisation de ces lampes à la place de celles à incandescence permettra de réduire son importance.

Les directives gouvernementales émises dans plusieurs pays ne vont qu'amplifier cette évolution vers les lampes à économie d'énergie.

Le développement de ce type de lampes rend par ailleurs impératif la gestion de leur récupération et de leur recyclage, compte tenu non seulement de la présence de mercure, mais aussi des métaux entrant dans leur composition.

Actuellement, la quasi totalité des matériaux (verre, mercure, métaux, etc.) issus du traitement des lampes de ce type est recyclée, atteignant un taux de recyclage supérieur à 90%. Seules les poudres fluorescentes, soit 1 à 4% en poids des lampes, sont aujourd'hui enfouies en centres de stockage agréés, après avoir été démercurisées.

Ces poudres fluorescentes comprennent un ou plusieurs luminophores ainsi que des additifs pour améliorer la performance des lampes (alumine, phosphate ou borate de calcium etc.).

Or, les composés luminophores présents dans ces poudres sont des matériaux dont l'élaboration est chère et qui contiennent des éléments rares et couteux, comme les terres rares.

Il y a donc un besoin important pour un procédé permettant de séparer les différents composants de ces poudres pour ensuite les valoriser séparément.

Le procédé de l'invention répond à ce besoin.

Dans ce but, le procédé de l'invention est un procédé de récupération des terres rares à partir d'un mélange solide contenant au moins un halophosphate et au moins un composé d'une ou plusieurs terres rares, et il est caractérisé en ce qu'il comprend les étapes suivantes :
- (a) on effectue une attaque acide en milieu liquide dudit mélange;
- (b) on ajoute une base au milieu obtenu à la suite de l'étape (a) de manière à remonter le pH dudit milieu à une valeur d'au moins 1,5 ce par quoi on obtient une première phase solide comprenant une ou des terres rares au moins en partie sous forme phosphate et une première phase liquide comprenant au moins un élément alcalino-terreux de l'halophosphate et on sépare la première phase solide de la première phase liquide;
- (c) on attaque le solide issu de l'étape (b) par une base forte ce par quoi on obtient une seconde phase solide comprenant une ou des terres rares au moins sous forme hydroxyde et une seconde phase liquide comprenant un phosphate du cation de la base forte et on sépare la seconde phase solide de la seconde phase liquide;
- (d) on effectue une attaque acide du solide issu de l'étape (c) dans des conditions telles que le pH du milieu réactionnel soit inférieur à 7 ce par quoi on obtient une troisième phase solide et une troisième phase liquide comprenant au moins un sel de terre rare et on sépare la troisième phase solide de la troisième phase liquide.

Le procédé de l'invention est un procédé simplifié qui permet un rendement de récupération des terres rares important, qui peut être notamment d'au moins 75% voire d'au moins 80%.

Par ailleurs, selon un mode de réalisation particulier, ce procédé donne lieu à un effluent solide valorisable et à un effluent liquide acceptable compte tenu des contraintes environnementales.

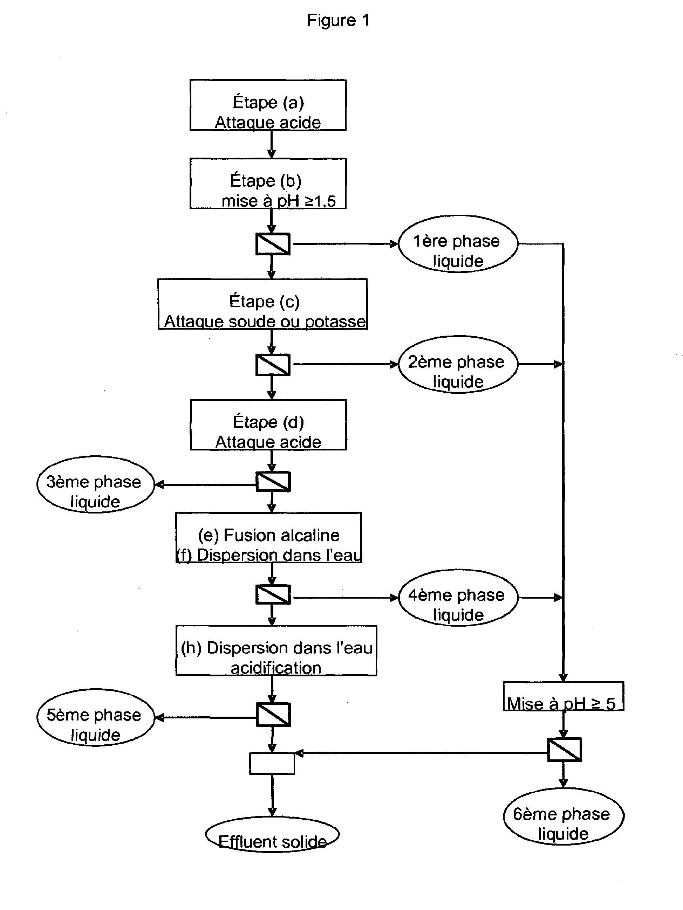

D'autres caractéristiques, détails et avantages de l'invention apparaîtront encore plus complètement à la lecture de la description qui va suivre faite en référence au dessin annexé dans lequel :
- la figure unique est un schéma blocs du procédé de l'invention.

Pour la présente description on entend par terre rare les éléments du groupe constitué par l'yttrium et les éléments de la classification périodique de numéro atomique compris inclusivement entre 57 et 71.

On précise aussi pour la suite de la description que, sauf indication contraire, dans toutes les gammes ou limites de valeurs qui sont données, les valeurs aux bornes sont incluses, les gammes ou limites de valeurs ainsi définies couvrant donc toute valeur au moins égale et supérieure à la borne inférieure et/ou au plus égale ou inférieure à la borne supérieure.

Le procédé de récupération de l'invention part d'un mélange sous forme solide qui contient notamment au moins un halophosphate et au moins un composé d'une ou plusieurs terres rares.

Le procédé de l'invention peut s'appliquer particulièrement bien à un mélange qui est issu d'un traitement de récupération ou de recyclage des lampes, comme par exemple des tubes fluorescents, des lampes linéaires, compactes, trichromatiques ou halogènes, traitement qui a permis au préalable de récupérer au moins en partie des matériaux comme le verre, le mercure ou d'autres métaux.

Ce mélange se présente généralement sous la forme d'une poudre dont la granulométrie peut varier notamment entre 1 µm et 10 µm, plus particulièrement entre 3 µm et 10 µm et dont la densité peut être comprise par exemple entre 3 et 5.

Un premier type d'halophosphate présent dans le mélange de départ est un luminophore utilisé dans les lampes pour sa couleur d'émission blanche. Il s'agit généralement d'un composé de type apatite, c'est à dire un composé qui est un mélange d'un phosphate de calcium et d'un autre sel de cet élément et qui peut comprendre aussi des halogènes comme le fluor ou le chlore. On peut citer comme exemple l'hydroxyapatite Ca₁₀(PO₄)₆(OH)₂, la chloroapatite Ca₃(PO₄)₂CaCl₂, la fluoroapatite Ca₅(PO₄)₃F. D'une manière connue, les composés de ce type peuvent comprendre en outre un autre élément alcalino-terreux comme le strontium en substitution partielle du calcium, des éléments dopants du type élément de transition comme l'antimoine ou le manganèse ou du type terre rare. A titre d'exemple on peut mentionner un composé représenté par la formule générale (Sr,Ca)₁₀(PO₄)₆(Cl,F)₂ : Sb³⁺,Mn²⁺.

Comme autre type d'halophosphate on peut mentionner les produits de type phosphate comprenant un halogène, un élément alcalino-terreux et une terre rare comme l'europium par exemple. On peut citer comme exemple de composé de ce type celui de formule Sr₅(PO₄)₃Cl :Eu²⁺. Ces halophosphates sont généralement utilisés pour leur couleur d'émission bleue.

Le mélange solide de départ comprend en outre un composé d'une ou plusieurs terres rares.

Ces composés peuvent être de nature diverse. Ils peuvent être choisis plus particulièrement parmi les phosphates, les aluminates d'alcalino-terreux, les borates, les vanadates et les oxydes de terres rares.

Pour les phosphates on peut citer plus particulièrement les phosphates de cérium ou de terbium ou encore d'une combinaison de ces deux terres rares. Ce peut être aussi des phosphates de lanthane en combinaison avec au moins une des deux terres rares précitées et ce peut être aussi tout particulièrement des phosphates de lanthane, de cérium et de terbium. Ces phosphates sont généralement des orthophosphates qui peuvent être représentés par la formule générale LnPO₄, Ln désignant au moins une terre rare comme le lanthane, le cérium et le terbium. Il s'agit là notamment des luminophores utilisés pour leur émission dans le vert.

Pour les aluminates, il s'agit d'aluminates d'alcalino-terreux, l'alcalino-terreux pouvant être plus particulièrement le magnésium, le baryum, le calcium ou le strontium, pris seul ou en combinaison. Il s'agit généralement des produits utilisés dans les lampes pour leur émission dans le bleu ou le vert.

La terre rare, qui peut être présente comme élément de la matrice ou comme dopant, peut être notamment le cérium, le terbium, l'europium, le néodyme et le dysprosium, ces éléments pouvant être pris seul ou en combinaison.

Ainsi, le baryum peut être partiellement substitué par au moins un élément choisi parmi le strontium, le calcium ou les terres rares autres que l'europium. De même, le magnésium peut être partiellement substitué par au moins un élément choisi parmi le zinc ou le manganèse ou le cobalt. Enfin, l'aluminium peut aussi être partiellement substitué par au moins un élément choisi parmi le gallium, le scandium, le bore, le germanium ou le silicium.

A titre d'exemple seulement on peut mentionner des aluminates de formules suivantes : BaMgAl₁₀O₁₇ : Eu²⁺ ou (Ce,Tb)MgAl₁₁O₁₉.

Les borates de terres rares peuvent être des orthoborates de formule LnBO₃, Ln représentant au moins une terre rare ou encore des oxyborates de terre rare de formule Ln₃BO₆. On sait que dans ces borates la terre rare peut être présente comme élément de la matrice du borate, dans ce cas la terre rare peut être notamment le lanthane, le lutécium, l'yttrium et le gadolinium ou une combinaison d'au moins deux de ces terres rares mais aussi comme élément dopant. Dans ce dernier cas, la terre rare peut être plus particulièrement l'europium, le samarium, le thulium et l'ytterbium, ces éléments pouvant être pris seuls ou en combinaison. La terre rare dopante peut aussi être présente en combinaison avec un deuxième dopant comme le bismuth, le plomb, l'antimoine, le chrome et le fer.

Comme exemple de borate on peut donner un produit de formule : (Gd,Mg)B₅O₁₀:Ce³⁺,Tb³⁺.

Les terres rares peuvent être aussi présentes sous forme de vanadates, dopés avec une terre rare comme l'europium. On peut citer ainsi les composés YVO₄:Eu ou Y(P,V)O₄:Eu.

Enfin, le composé de terre rare du mélange de départ peut être un oxyde de terre rare de formule générale Ln₂O₃. On peut citer plus particulièrement l'oxyde d'yttrium (Y₂O₃) ou de gadolinium (Gd₂O₃) ou encore l'oxyde mixte d'yttrium et de gadolinium ((Y,Gd)₂O₃). Ces oxydes d'yttrium et/ou de gadolinium sont généralement dopés à l'europium et ils peuvent contenir éventuellement d'autres éléments supplémentaires choisis parmi les terres rares autres que l'europium, le gadolinium et l'yttrium. On peut citer notamment le terbium, le samarium ou le lanthane. De tels oxydes sont généralement utilisés dans les lampes pour leurs émissions rouges.

Le mélange solide de départ peut en outre contenir des composés de type alumine Al₂O₃, silice SiO₂, phosphates de calcium et d'autres résidus provenant du traitement des lampes tels que des métaux comme le mercure ou des plastiques ou encore des débris de verre.

Les proportions respectives halophosphate et de composés de terres rares peuvent varier dans une large gamme en fonction notamment du type de lampe dont est issu le mélange à traiter. Le procédé de l'invention peut s'appliquer tout particulièrement aux mélanges qui présentent une teneur d'au plus environ 80% en masse d'halophosphate, cette valeur n'étant pas critique et étant donnée uniquement à titre d'exemple.

Les différentes étapes du procédé de l'invention vont maintenant être décrites en détail et on pourra, pour la suite de la description, se référer à la figure annexée dans laquelle ces étapes sont schématisées.

La première étape du procédé de l'invention, étape (a) est une attaque acide du mélange solide qui vient d'être décrit.

Cette attaque se fait en milieu liquide. Ainsi, on peut former une dispersion dans l'eau du mélange solide et on met en contact la dispersion ainsi formée avec un acide. On peut procéder dans un réacteur agité contenant la dispersion et introduire dans le réacteur une solution d'acide.

L'acide est de préférence un acide fort comme l'acide nitrique ou l'acide chlorhydrique.

L'attaque acide se fait de préférence à chaud, par exemple à une température comprise entre 40°C et 80°C.

Généralement l'attaque est conduite jusqu'à l'obtention d'un pH dans le milieu réactionnel qui est inférieur ou égal à 1.

Une fois le pH atteint après addition de la quantité nécessaire d'acide il peut être avantageux d'effectuer un mûrissement du milieu réactionnel en maintenant celui-ci dans les mêmes conditions de pH et de température que celles à l'issue de l'attaque, éventuellement sous agitation.

La seconde étape du procédé, étape (b), consiste à ajouter une base au milieu obtenu à l'issu de l'étape (a), éventuellement en maintenant le milieu à la même température que celle à laquelle il se trouvait avant l'introduction de la base.

On utilise de préférence une base de type hydroxyde alcalin comme la soude. L'addition de la base se fait de façon que le pH du mélange réactionnel soit remonté à une valeur de pH d'au moins 1,5 plus particulièrement d'au moins 2.

Après addition de la base et, de préférence, refroidissement du milieu réactionnel, on sépare les phases du milieu réactionnel par tout procédé convenable de séparation solide/liquide comme par exemple filtration, centrifugation, décantation.

A l'issue de cette séparation on recueille une première phase solide et une première phase liquide. On peut effectuer un lavage à l'eau de la phase solide.

La première phase solide comprend la ou les terres rares du mélange solide de départ. Cette terre rare ou ces terres rares sont au moins en partie sous forme phosphate, notamment orthophosphate. La phase solide peut en effet contenir une ou des terres rares sous une autre forme par exemple sous forme d'aluminates et, éventuellement et en quantités résiduelles, de borates ou d'oxydes, en fonction notamment de la composition du mélange solide de départ, ces formes correspondant à des composés de terre rare qui n'ont pas été attaqués lors de l'attaque acide de la première étape. Enfin, cette phase solide peut contenir en outre d'autres composés comme de l'alumine ou de la silice.

La première phase liquide comprend au moins un élément alcalino-terreux qui est l'alcalino-terreux de l'halophosphate de départ, notamment le calcium ou le strontium sous forme d'une solution, généralement aqueuse, du sel de l'acide utilisé lors de l'attaque acide.

Cette phase liquide peut être soit éliminée comme effluent liquide du procédé, soit encore traitée ultérieurement selon une variante du procédé qui sera décrite plus loin.

L'étape suivante du procédé de l'invention, étape (c) est une attaque du solide (première phase solide) issu de l'étape (b) par une base forte qui peut être plus particulièrement une solution de soude ou de potasse.

Cette attaque est réalisée en mettant en contact sous agitation la base forte sous forme de solution avec le solide. Le mélange obtenu est porté à une température d'au moins 100°C, plus particulièrement d'au moins 120°C, sur une durée qui peut varier entre 30 mn et 2 h par exemple, cette durée étant d'autant plus courte que la température du mélange est élevée.

A l'issue de l'attaque il est possible de diluer le mélange réactionnel par addition d'eau pour diminuer si nécessaire sa viscosité.

Le milieu est ensuite soumis à une séparation des phases solide et liquide là encore par tout moyen connu, par exemple par filtration.

A l'issue de cette séparation on recueille une seconde phase solide et une seconde phase liquide. On peut effectuer un lavage à l'eau de la phase solide.

Cette seconde phase solide comprend une ou plusieurs terres rares dont au moins une partie est sous forme d'hydroxyde Ln(OH)₃, Ln représentant au moins une terre rare.

Toujours en fonction notamment de la composition du mélange solide de départ, la phase solide peut contenir une ou des terres rares sous une autre forme par exemple sous forme d'aluminates et, éventuellement et en quantités résiduelles, de borates ou de phosphates correspondant à des composés de terre rare qui n'ont pas été attaqués lors de l'attaque acide de la première étape ainsi que d'autres composés comme de l'alumine ou de la silice.

La seconde phase liquide comprend des composés de type phosphate du cation de la base forte utilisée pour l'attaque à l'étape (c), par exemple de type phosphate de sodium ou de potassium. Elle peut éventuellement contenir du silicate de ce cation comme du silicate de sodium ou de potassium.

Cette phase liquide peut être soit éliminée comme un autre effluent liquide du procédé soit aussi traitée ultérieurement selon une variante du procédé qui sera décrite plus loin.

Le procédé comprend ensuite une étape (d) de traitement du solide issu de l'étape précédente (la seconde phase solide) éventuellement après lavage à l'eau de celle-ci.

Ce traitement est une attaque acide. Le solide peut ainsi être mis en dispersion dans de l'eau et on ajoute un acide à la dispersion ainsi obtenue.

L'acide est de préférence un acide fort comme l'acide nitrique ou l'acide chlorhydrique.

L'attaque acide est conduite par addition de l'acide dans des conditions telles que le pH du milieu réactionnel soit inférieur à 7, de préférence inférieur à 3, par exemple égal à 1.

Selon une variante intéressante, la dispersion ou le milieu issu de cette attaque acide est chauffé, par exemple jusqu'à sa température d'ébullition et il est maintenu à cette température et à la valeur de pH de départ sur une durée qui peut être par exemple égale à 1 h.

Cette variante peut être mise en oeuvre en effectuant un autoclavage de la dispersion ou du milieu à une température qui peut aller jusqu'à 200°C par exemple.

On sépare par tout moyen connu les phases solide et liquide du milieu obtenues à l'issue de l'attaque acide.

A l'issue de cette séparation on recueille une troisième phase solide et une troisième phase liquide. On peut effectuer un lavage à l'eau de la phase solide.

La phase liquide comprend au moins un sel d'une ou de plusieurs terres rares et de l'acide utilisé pour l'attaque acide de l'étape (d), par exemple un nitrate ou un chlorure. Cette phase liquide constitue la production du procédé de récupération de l'invention puisque c'est elle qui contient la ou les terres rares présente(s) dans le mélange solide de départ. Dans le cas d'un mélange de terres rares, la séparation de celles-ci peut se faire par exemple par des procédés connus de type extraction liquide/liquide.

La phase solide récupérée contient toutes les espèces inattaquées par exemple de l'alumine ou de la silice et elle constitue le résidu solide du procédé.

Selon un mode de réalisation particulier qui va maintenant être décrit, le procédé de l'invention peut comprendre des étapes supplémentaires.

Ce mode de réalisation est mis en oeuvre en fonction de la composition du mélange solide de départ. Ainsi, il est particulièrement utile si ce mélange contient des composés de type aluminates d'alcalino-terreux et de terre rare et notamment les aluminates qui comprennent du magnésium.

Selon ce mode de réalisation, le procédé comporte donc les étapes supplémentaires suivantes :
- (e) on mélange le solide issu de l'étape (d) décrite plus haut avec un composé solide alcalin et on calcine le mélange ainsi obtenu;
- (f) on redisperse dans l'eau le produit calciné issu de l'étape précédente;
- (g) on sépare de la dispersion obtenue à l'issue de l'étape précédente une quatrième phase solide comprenant une ou des terres rares au moins sous forme hydroxyde et une quatrième phase liquide comprenant au moins un élément alcalin;
- (h) on disperse dans l'eau le solide issu de l'étape précédente et on acidifie la dispersion ainsi obtenue;
- (i) on sépare de la dispersion obtenue à l'issue de l'étape précédente une cinquième phase solide et une cinquième phase liquide comprenant au moins un sel de terre rare.

L'étape (e) est une étape de réaction solide/solide (fusion alcaline) dans laquelle on mélange le solide issu de l'étape (d) avec un composé alcalin qui peut être par exemple un hydroxyde, comme NaOH, un oxyde comme NaO, et plus particulièrement un carbonate, encore plus particulièrement un carbonate de sodium. Le mélange est réalisé avec une proportion massique de composé alcalin généralement en excès par rapport au solide pour avoir une réaction optimale, cette proportion pouvant être par exemple d'au moins 3 parties de composé alcalin pour 1 partie de solide, notamment de 5 parties de composé alcalin pour 1 partie de solide.

La calcination est conduite en four à une température suffisante pour obtenir une fusion du mélange par exemple à une température d'au moins 900°C. La durée de cette calcination peut être comprise, à titre d'exemple uniquement, entre 1 et 4 h.

A l'issue de la calcination, le solide obtenu est refroidi et on le disperse dans l'eau, par exemple de l'eau chaude, sous agitation de préférence, de façon à obtenir une dispersion.

Les phases solide et liquide de la dispersion sont ensuite séparées par tout moyen connu, notamment par filtration, ce par quoi on obtient une quatrième phase solide et une quatrième phase liquide.

La phase solide, qui peut être lavée à l'eau, contient une ou des terres rares qui sont généralement présente sous forme d'hydroxydes Ln(OH)₃ ,ainsi que des résidus du type alumine ou silice.

La phase liquide comprend un élément alcalin qui est celui du composé solide utilisé à l'étape (e) cet élément alcalin se trouvant généralement sous la forme d'un hydroxyde par exemple NaOH, d'un aluminate par exemple NaAlO₂ ou encore d'un silicate comme Na₂SiO₃.

Cette phase liquide peut être soit éliminée comme effluent liquide du procédé soit encore traitée ultérieurement selon une variante du procédé qui sera décrite plus loin.

Afin de récupérer la ou les terres rares contenues dans le résidu solide issu de l'étape (g) (quatrième phase solide) on disperse dans l'eau ce solide et on acidifie la dispersion ainsi obtenue.

Cette acidification peut être faite avec un acide fort par exemple avec de l'acide nitrique ou chlorhydrique. L'acidification est conduite par addition de l'acide jusqu'à l'obtention d'une valeur de pH dans le milieu réactionnel inférieure à 7, de préférence d'au plus 3, par exemple égale à 1.

Selon une variante intéressante, la dispersion ou le milieu issu de l'acidification est chauffé, par exemple jusqu'à sa température d'ébullition et il est maintenu à cette température et à la valeur de pH de départ sur une durée qui peut être par exemple égale à 1 h.

Les phases solide et liquide du milieu obtenu sont ensuite séparées par tout moyen connu, notamment par filtration, ce par quoi on obtient une cinquième phase solide et une cinquième phase liquide.

La phase solide récupérée contient des espèces qui n'ont pas été attaquées par exemple de l'alumine ou de la silice.

La phase liquide constitue aussi une production du procédé de récupération de l'invention puisque elle contient la ou les terres rares qui étaient encore présentes dans le solide obtenu à l'issue de l'étape (d). Dans le cas d'un mélange de terres rares, la séparation de celles-ci peut se faire, là aussi, par des procédés connus de type extraction liquide/liquide.

Une variante intéressante du procédé de l'invention va maintenant être décrite qui concerne le traitement des phases liquides obtenues dans les différentes étapes qui ont été décrites plus haut.

Selon cette variante, on mélange les première et seconde phases liquides précitées et, le cas échéant, la quatrième phase liquide si les étapes (e) à (g) ont été mises en oeuvre. On amène ensuite à un pH d'au moins 5, plus particulièrement d'au moins 7, notamment compris entre 7 et 8, le mélange ainsi obtenu, ce par quoi on obtient un précipité dans une sixième phase liquide, puis on sépare le précipité de cette sixième phase liquide.

La mise au pH à la valeur donnée ci-dessus se fait par addition au mélange d'une solution basique ou acide en fonction des quantités respectives des différentes phases liquides qui ont été utilisées pour former le mélange.

Le précipité obtenu peut être mélangé à la phase solide récupérée à l'issue de l'étape (d) ou de l'étape (i).

Cette variante peut être particulièrement intéressante lorsqu'on effectue l'attaque acide de l'étape (a) avec de l'acide chlorhydrique, l'étape (c) avec une solution de soude et si, lorsque l'étape (e) est mise en oeuvre, on utilise lors de celle-ci un composé de sodium. Dans ce cas en effet on obtient un précipité qui constitue l'effluent solide du procédé et qui comprend une hydroxyapatite et une sixième phase liquide qui constitue l'effluent liquide du procédé et qui comprend du chlorure de sodium. L'hydroxyapatite de type Ca₁₀(PO₄)₆(OH)₂ est un solide valorisable.

On notera qu'à l'issue du procédé selon cette variante, on récupère uniquement un solide valorisable et un effluent liquide dont le traitement ne pose pas de problème majeur, ce qui rend ce procédé avantageux d'un point de vue environnemental.

Des exemples non limitatifs vont maintenant être donnés.

### EXEMPLE 1

Cet exemple concerne un procédé selon l'invention dans lequel on utilise l'acide nitrique pour les attaques acides.

On part comme mélange de départ d'une poudre de luminophores qui présente, pour 100 g, la composition suivante exprimée en oxydes des différents éléments:

**Tableau 1**

| | |
|---|---|
| Eu₂O₃ | 1 g |
| Gd₂O₃ | 2 g |
| CeO₂ | 2 g |
| Y₂O₃ | 22 g |
| La₂O₃ | 1 g |
| Tb₄O₇ | < 1 g |
| Al₂O₃ | 7 g |
| CaO | 35 g |
| BaO | 1 g |
| MnO | 1 g |
| Sb₂O₃ | 1 g |
| P₂O₅ | 27 g |

### Attaque acide

Dans un réacteur agité on disperse la poudre de luminophores dans de l'eau pour obtenir une dispersion de concentration de 170 g/l que l'on chauffe à une température 70°C. Sur cette dispersion agitée et chauffée, on verse en 1 h une solution d'acide nitrique jusqu'à ce que le pH de la solution se maintienne inférieur à 1. Le mélange est ensuite laissé à digérer pendant 1 h sous agitation et il est maintenu à la même température et au même pH.

Puis, on ajoute en 1 h au mélange une solution de soude de concentration égale à 4N, de façon que le pH du mélange soit remonté à 2. Le mélange est laissé sous agitation pendant 1 h.

Après refroidissement, le mélange est filtré, les eaux de filtration sont récupérées. Elles présentent la composition suivante :

**Tableau 2**

| | |
|---|---|
| Al₂O₃ | 1 g |
| CaO | 25,8 g |
| MnO | 0,5 g |
| P₂O₅ | 5 g |
| MgO | 0,5 g |
| SiO₂ | 7,2 g |
| SrO | 0,5 g |
| ZnO | 0,013 g |
| B₂O₃ | 2,3 g |
| Na₂O | 11,6 g |

Le solide résiduel, lavé sur le filtre, est ensuite récupéré.

### Attaque sodique

Dans un réacteur inox agité, on ajoute une solution de soude à 55% et le solide humide précédent. La quantité de soude est telle que le rapport massique NaOH/ solide est égal à 3. Le mélange est porté à une température de 140°C pendant 45 mn. Puis après refroidissement à 80°C, on dilue le mélange par ajout d'eau chaude à 60°C.

Enfin, le mélange, laissé à refroidir jusqu'à 50°C, est filtré, les eaux-mères sont récupérées.

Le résidu solide est lavé sur filtre, puis récupéré pour être redispersé dans de l'eau pure placée dans un réacteur agité.

### Attaque acide

On ajoute alors une solution d'acide nitrique, jusqu'à obtenir un pH de 1 à 60°C. Le mélange obtenu est filtré, les eaux-mères, contenant les nitrates de terres rares, sont récupérées pour un traitement ultérieur de séparation des terres rares par extraction liquide/liquide.

On donne ci-dessous, la teneur en terres rares exprimée en oxyde de ces eaux-mères.

**Tableau 3**

| | |
|---|---|
| Eu₂O₃ | 0,92 g |
| Gd₂O₃ | 2,3 g |
| CeO₂ | 0,46 g |
| Y₂O₃ | 16,8 g |
| La₂O₃ | 0,46 g |
| Tb₄O₇ | 0,46 g |
| Total | 21,4 g |

### Fusion alcaline

Le résidu solide, après lavage sur filtre, est mélangé avec du carbonate de sodium Na₂CO₃, dans un rapport massique de 5 parties de carbonate pour une partie de résidu. Le mélange, placé en creuset, est introduit dans un four pour être calciné à une température de 950°C pendant 3 h. Le solide fondu obtenu après refroidissement est délité dans l'eau pure chaude à 80°C de façon à obtenir une dispersion de 100 g/l de résidu de départ, puis maintenu sous agitation pendant 1 h. Après refroidissement, la dispersion est filtrée, les eaux-mères récupérées.

### Dispersion/acidification

Le solide obtenu, après lavage sur filtre, est dispersé dans l'eau pure. La dispersion est acidifiée par ajout d'acide nitrique, jusqu'à pH 1, puis mise à ébullition pendant 1 h avec maintien du pH à 1.

Après refroidissement, la dispersion est filtrée, les eaux-mères, contenant les nitrates de terres rares, sont récupérées pour un traitement ultérieur de séparation des terres rares par extraction liquide/liquide.

On donne ci-dessous, la teneur en terres rares exprimée en oxyde de ces eaux-mères.

**Tableau 4**

| | |
|---|---|
| Eu₂O₃ | 0,22 g |
| Gd₂O₃ | 0,35 g |
| CeO₂ | 0,416 g |
| Y₂O₃ | 1,85 g |
| La₂O₃ | 0,128 g |
| Tb₄O₇ | 0,22 g |
| Total | 3,184 g |

Le rendement global pour les terres rares est de 87,8%.

### EXEMPLE 2

Cet exemple concerne un procédé selon l'invention dans lequel on utilise l'acide chlorhydrique pour la première attaque acide de la poudre de luminophore. Les étapes suivantes du procédé sont conduites de la même manière que dans l'exemple 1.

On donne dans les tableaux ci-dessous les analyses des eaux de filtration récupérées à l'issue de la première attaque acide (tableau 5) et de la seconde attaque acide (tableau 6).

**Tableau 5**

| | |
|---|---|
| Al₂O₃ | 0,3 g |
| CaO | 29,4 g |
| MnO | 0,73 g |
| Sb₂O₃ | 0,012 g |
| P₂O₅ | 16,2 g |
| MgO | 0,3 g |
| SiO₂ | 0,3 g |
| SrO | 0,2 g |
| ZnO | 0,022 g |
| B₂O₃ | 2,1 g |
| K₂O | 1,5 g |
| Na₂O | 12,51 g |

**Tableau 6**

| | |
|---|---|
| Eu₂O₃ | 0,85 g |
| Gd₂O₃ | 2,33 g |
| CeO₂ | 0,64 g |
| Y₂O₃ | 16,53 g |
| La₂O₃ | 0,21 g |
| Tb₄O₇ | 0,42 g |
| Total | 20,98 g |

Le rendement global pour les terres rares est de 84,1%.

## Revendications

1. Procédé de récupération des terres rares à partir d'un mélange solide contenant au moins un halophosphate et au moins un composé d'une ou plusieurs terres rares, **caractérisé en ce qu'**il comprend les étapes suivantes :
- (a) on effectue une attaque acide en milieu liquide dudit mélange;
- (b) on ajoute une base au milieu obtenu à la suite de l'étape (a) de manière à remonter le pH dudit milieu à une valeur d'au moins 1,5 ce par quoi on obtient une première phase solide comprenant une ou des terres rares au moins en partie sous forme phosphate et une première phase liquide comprenant au moins un élément alcalino-terreux de l'halophosphate et on sépare la première phase solide de la première phase liquide;
- (c) on attaque le solide issu de l'étape (b) par une base forte ce par quoi on obtient une seconde phase solide comprenant une ou des terres rares au moins sous forme hydroxyde et une seconde phase liquide comprenant un phosphate du cation de la base forte et on sépare la seconde phase solide de la seconde phase liquide;
- (d) on effectue une attaque acide du solide issu de l'étape (c) dans des conditions telles que le pH du milieu réactionnel soit inférieur à 7, ce par quoi on obtient une troisième phase solide et une troisième phase liquide comprenant au moins un sel de terre rare et on sépare la troisième phase solide de la troisième phase liquide.

2. Procédé selon la revendication 1, **caractérisé en ce qu'**on utilise un mélange solide qui contient, comme composé de terre rare, un composé choisi parmi les phosphates, les aluminates d'alcalino-terreux, les borates, les vanadates et les oxydes.

3. Procédé selon la revendication 1 ou 2, **caractérisé en ce qu'**on effectue l'attaque acide de l'étape (a) avec de l'acide nitrique ou de l'acide chlorhydrique.

4. Procédé selon l'une des revendications précédentes, **caractérisé en ce qu'**on effectue l'étape (c) à une température d'au moins 100°C.

5. Procédé selon l'une des revendications précédentes, **caractérisé en ce qu'**il comprend les étapes complémentaires suivantes :
- (e) on mélange le solide issu de l'étape (d) avec un composé solide alcalin et on calcine le mélange ainsi obtenu;
- (f) on redisperse dans l'eau le produit calciné issu de l'étape précédente;
- (g) on sépare de la dispersion obtenue à l'issue de l'étape précédente une quatrième phase solide comprenant une ou des terres rares au moins sous forme hydroxyde et une quatrième phase liquide comprenant au moins un élément alcalin;
- (h) on disperse dans l'eau le solide issu de l'étape précédente et on acidifie la dispersion ainsi obtenue;
- (i) on sépare de la dispersion obtenue à l'issue de l'étape précédente une cinquième phase solide et une cinquième phase liquide comprenant au moins un sel de terre rare.

6. Procédé selon la revendication 5, **caractérisé en ce qu'**on utilise comme mélange solide de départ un mélange qui contient, comme composé de terre rare un aluminate d'alcalino-terreux.

7. Procédé selon l'une des revendications précédentes, **caractérisé en ce qu'**après l'attaque acide à l'étape (d) ou l'acidification, à l'étape (h), le milieu obtenu à l'issue de ces étapes est chauffé, plus particulièrement maintenu à ébullition, ou est soumis à un autoclavage.

8. Procédé selon l'une des revendications précédentes, **caractérisé en ce qu'**on effectue l'attaque acide à l'étape (d) ou l'acidification de l'étape (h) avec de l'acide nitrique ou chlorhydrique.

9. Procédé selon la revendication précédente, **caractérisé en ce qu'**on mélange les première et seconde phases liquides précitées et, le cas échéant, la quatrième phase liquide et on amène à pH d'au moins 5 le mélange ainsi obtenu, ce par quoi on obtient un précipité dans une sixième phase liquide, puis on sépare le précipité de cette sixième phase liquide.

10. Procédé selon la revendication 9, **caractérisé en ce qu'**on effectue l'attaque acide de l'étape (a) avec de l'acide chlorhydrique, l'étape (c) avec une solution de soude et, si l'étape (e) est mise en oeuvre, on utilise lors de celle-ci un composé de sodium ce par quoi on obtient un précipité comprenant une hydroxyapatite et une sixième phase liquide comprenant du chlorure de sodium.

## Patentansprüche

1. Verfahren zur Rückgewinnung von Seltenerdmetallen aus einem festen Gemisch, das mindestens ein Halogenphosphat und mindestens eine Verbindung eines oder mehrerer Seltenerdmetalle enthält, **dadurch gekennzeichnet, dass** es folgende Schritte umfasst:
- (a) man führt einen Säureangriff auf das Gemisch in flüssigem Medium durch;
- (b) man gibt eine Base zu dem am Ende von Schritt (a) erhaltenen Medium, so dass der pH-Wert des Mediums auf einen Wert von mindestens 1,5 angehoben wird, wodurch man eine erste feste Phase, die ein oder mehrere Seltenerdmetalle zumindest teilweise in Phosphatform umfasst, und eine erste flüssige Phase, die mindestens ein Erdalkalielement des Halogenphosphats umfasst, erhält, und trennt die erste feste Phase von der ersten flüssigen Phase;
- (c) man greift den Feststoff aus Schritt (b) mit einer starken Base an, wodurch man eine zweite feste Phase, die ein oder mehrere Seltenerdmetalle zumindest in Hydroxidform umfasst, und eine zweite flüssige Phase, die ein Phosphat des Kations der starken Base umfasst, erhält, und trennt die zweite feste Phase von der zweiten flüssigen Phase;
- (d) man führt einen Säureangriff auf den Feststoff aus Schritt (c) unter solchen Bedingungen durch, dass der pH-Wert des Reaktionsmediums kleiner als 7 ist, wodurch man eine dritte feste Phase und eine dritte flüssige Phase, die mindestens ein Seltenerdmetallsalz umfasst, erhält, und trennt die dritte feste Phase von der dritten flüssigen Phase.

2. Verfahren nach Anspruch 1, **dadurch gekennzeichnet, dass** man ein festes Gemisch verwendet, das als Seltenerdmetallverbindung eine aus Phosphaten, Erdalkalialuminaten, Boraten, Vanadaten und Oxiden ausgewählte Verbindung enthält.

3. Verfahren nach Anspruch 1 oder 2, **dadurch gekennzeichnet, dass** man den Säureangriff von Schritt (a) mit Salpetersäure oder Salzsäure durchführt.

4. Verfahren nach einem der vorhergehenden Ansprüche, **dadurch gekennzeichnet, dass** man Schritt (c) bei einer Temperatur von mindestens 100°C durchführt.

5. Verfahren nach einem der vorhergehenden Ansprüche, **dadurch gekennzeichnet, dass** es folgende zusätzliche Schritte umfasst:
- (e) man mischt den Feststoff aus Schritt (d) mit einer festen Alkaliverbindung und calciniert die so erhaltene Mischung;
- (f) man redispergiert das calcinierte Produkt aus dem vorhergehenden Schritt in Wasser;
- (g) man trennt aus der am Ende des vorhergehenden Schritts erhaltenen Dispersion eine vierte feste Phase, die ein oder mehrere Selten-erdmetalle zumindest in Hydroxidform umfasst, und eine vierte flüssige Phase, die mindestens ein Alkalielement umfasst, ab;
- (h) man dispergiert den Feststoff aus dem vorhergehenden Schritt in Wasser und säuert die so erhaltene Suspension an;
- (i) man trennt aus der am Ende des vorhergehenden Schritts erhaltenen Dispersion eine fünfte feste Phase und eine fünfte flüssige Phase, die mindestens ein Seltenerdmetallsalz umfasst, ab.

6. Verfahren nach Anspruch 5, **dadurch gekennzeichnet, dass** man als festes Ausgangsgemisch ein Gemisch verwendet, das als Seltenerdmetallverbindung ein Erdalkalialuminat umfasst.

7. Verfahren nach einem der vorhergehenden Ansprüche, **dadurch gekennzeichnet, dass** man nach dem Säure-angriff von Schritt (d) oder dem Ansäuern von Schritt (h) das am Ende dieser Schritte erhaltene Medium erhitzt, insbesondere am Sieden hält, oder autoklaviert.

8. Verfahren nach einem der vorhergehenden Ansprüche, **dadurch gekennzeichnet, dass** man den Säureangriff von Schritt (d) oder das Ansäuern von Schritt (h) mit Salpetersäure oder Salzsäure durchführt.

9. Verfahren nach dem vorhergehenden Anspruch, **dadurch gekennzeichnet, dass** man die obige erste und zweite flüssige Phase und gegebenenfalls die vierte flüssige Phase mischt und die so erhaltene Mischung auf einen pH-Wert von mindestens 5 einstellt, wodurch man einen Niederschlag in einer sechsten flüssigen Phase erhält, und dann den Niederschlag von dieser sechsten flüssigen Phase trennt.

10. Verfahren nach Anspruch 9, **dadurch gekennzeichnet, dass** man den Säureangriff von Schritt (a) mit Salzsäure, den Schritt (c) mit Natriumhydroxidlösung durchführt und in Schritt (e), sofern er durchgeführt wird, eine Natriumverbindung verwendet, wodurch man einen Niederschlag, der einen Hydroxyapatit umfasst, und eine sechste flüssige Phase, die Natriumchlorid umfasst, erhält.

## Claims

1. Method of recovering rare-earth elements from a solid mixture containing at least one halophosphate and at least one compound of one or more rare-earth elements, **characterized in that** it comprises the following steps:
- (a) currying out acid attack on said mixture in a liquid medium;
- (b) adding a base to the medium obtained at the end of step (a) so as to raise the pH of said medium to a value of at least 1.5, whereby a first solid phase is obtained comprising one or more rare-earth elements at least partly in the form of phosphate and a first liquid phase comprising at least one alkaline-earth element of halophosphate and the first solid phase is separated from the first liquid phase;
- (c) attacking the solid resulting from step (b) with a strong base, whereby a second solid phase is obtained comprising one or more rare-earth elements at least in the form of hydroxide and a second liquid phase comprising a phosphate of the cation of the strong base and the second solid phase is separated from the second liquid phase;
- (d) currying out acid attack on the solid resulting from step (c) in conditions such that the pH of the reaction mixture is below 7, whereby a third solid phase is obtained and a third liquid phase comprising at least one rare-earth salt and the third solid phase is separated from the third liquid phase.

2. Method according to Claim 1, **characterized in that** a solid mixture is used that contains, as compound of rare-earth element, a compound selected from phosphates, alkaline-earth aluminates, borates, vanadates and oxides.

3. Method according to Claim 1 or 2, **characterized in that** the acid attack in step (a) is carried out with nitric acid or hydrochloric acid.

4. Method according to one of the preceding claims, **characterized in that** step (c) is carried out at a temperature of at least 100°C.

5. Method according to one of the preceding claims, **characterized in that** it comprises the following additional steps:
- (e) mixing the solid resulting from step (d) with a solid alkaline compound and calcining the mixture thus obtained;
- (f) redispersing, in water, the calcined product resulting from the preceding step;
- (g) separating, from the dispersion obtained at the end of the preceding step, a fourth solid phase comprising one or more rare-earth elements at least in the form of hydroxide and a fourth liquid phase comprising at least one alkaline element;
- (h) preparing an aqueous dispersion of the solid resulting from the preceding step and acidifying the dispersion thus obtained;
- (i) separating, from the dispersion obtained at the end of the preceding step, a fifth solid phase and a fifth liquid phase comprising at least one rare-earth salt.

6. Method according to Claim 5, **characterized in that** a mixture containing an alkaline-earth aluminate as compound of rare-earth element is used as the solid starting mixture.

7. Method according to one of the preceding claims, **characterized in that** after the acid attack in step (d) or the acidification, in step (h), the medium obtained at the end of these steps is heated, more particularly is kept boiling, or is submitted to autoclaving.

8. Method according to one of the preceding claims, **characterized in that** the acid attack in step (d) or the acidification in step (h) is carried out with nitric acid or hydrochloric acid.

9. Method according to the preceding claim, **characterized in that** the aforementioned first and second liquid phases and, if applicable, the fourth liquid phase are mixed together and the pH of the mixture thus obtained is adjusted to at least 5, whereby a precipitate is obtained in a sixth liquid phase, then the precipitate is separated from said sixth liquid phase.

10. Method according to Claim 9, **characterized in that** the acid attack in step (a) is performed with hydrochloric acid, step (c) is performed with a solution of soda and, if step (e) is employed, a sodium compound is used during this, whereby a precipitate comprising a hydroxyapatite and a sixth liquid phase comprising sodium chloride are obtained.
